# EUROPÄISCHE PATENTSCHRIFT

(11) **EP 2 134 910 B1**
(45) Veröffentlichungstag und Bekanntmachung des Hinweises auf die Patenterteilung: **24.11.2010**
(21) Anmeldenummer: 08715809.3
(22) Anmeldetag: 13.02.2008
(51) Int. Cl.: E05B 17/10, B60Q 1/32

(54) **AUSSENBETÄTIGUNG FÜR SCHLÖSSER AN TÜREN, KLAPPEN UND DERGLEICHEN**
OUTSIDE ACTUATION SYSTEM FOR LOCKS ON DOORS, TAILGATES, AND THE LIKE
DISPOSITIF D'ACTIONNEMENT EXTÉRIEUR DESTINÉ À DES SERRURES DE PORTIÈRES, DE HAYONS ET SIMILAIRES

(30) Priorität: 03.04.2007 DE 102007016351
(43) Veröffentlichungstag der Anmeldung: 23.12.2009
(73) Patentinhaber: Huf Hülsbeck & Fürst GmbH & Co. KG, 42551 Velbert (DE)
(72) Erfinder: MÜLLER, Dirk, 45359 Essen (DE); LENNHOFF, Ralf, 58093 Hagen (DE); PFEIFFER, Sascha, 42285 Wuppertal (DE)
(74) Vertreter: Patentanwälte Buse, Mentzel, Ludewig
(86) Internationale Anmeldenummer: PCT/EP2008/001208
(87) Internationale Veröffentlichungsnummer: WO 2008/119413

(56) Entgegenhaltungen:
- DE-A1- 10 121 046
- DE-A1- 19 809 716
- DE-A1- 19 822 733
- DE-A1- 19 843 594

## Beschreibung

Die Erfindung betrifft eine Vorrichtung der im Oberbegriff des Anspruches 1 angegebenen Art. Die Handhabe wird von der Hand eines Benutzers erfasst und betätigt, um die Tür zu öffnen und beispielsweise in ein Fahrzeug einzusteigen. Damit die Handhabe vom Benutzer sicher erfasst werden kann, ist es sinnvoll den Bereich zu beleuchten. Der Benutzer kann somit die Handhabe sehen und sicher erfassen. Ein Ertasten der Handhabe ist somit nicht erforderlich.

Die DE 101 21 046 A1 beschreibt eine solche Vorrichtung, bei welcher ein elektrisch betriebener Sensor im Inneren der Handhabe angeordnet ist und die Annäherung eines Zugangsberechtigten detektiert. Die Handhabe weist eine oder mehrere Bohrungen auf, die zur Aufnahme einer Lichtquelle dienen. Diese Lichtquelle ist an die im Inneren der Handhabe verlegten elektrischen Versorgungsleitungen des Sensors angeschlossen, wobei die Elektronik des Sensors die Lichtquelle einschaltet. Insbesondere sind an der Handhabe zwei Lichtquellen vorgesehen, welche die Griffmulde von jedem Ende der Handhabe aus ausleuchten. Nachteilig bei dieser Anordnung ist jedoch, dass der Benutzer, der die Handhabe im Dunkeln betätigen will, den Boden nahe der Fahrzeugtür nicht erkennen kann, so dass die Gefahr besteht, zu stolpern, in eine Pfütze zu treten oder Ähnliches. Außerdem ist die Führung der elektrischen Leitungen zu der am zweiten Ende angeordneten Lichtquelle schwierig. Die Lichtquellen in den Bohrungen an der Handhabe ergeben auch kein zusammenhängiges optisches Bild.

Aufgabe der vorliegenden Erfindung ist es daher, eine Vorrichtung zu schaffen, welche gleichzeitig den Bereich der Handhabe und das am Boden befindliche Vorfeld ausleuchten kann, welche dabei einen optisch angenehmes Bild der Handhabe bietet und einfach zu montieren ist. Diese Aufgabe wird durch die kennzeichnenden Merkmale des Anspruches 1 gelöst, denen folgende besondere Bedeutung zukommt.

Die Beleuchtungseinrichtung umfasst ein Gehäuse, welches als Teil der Handhabe selbst ausgebildet und nahe der Lagerachse angeordnet ist. Dieses Gehäuse bildet mit der Handhabe eine gemeinsame Einheit. Die Beleuchtungseinrichtung leuchtet sowohl die Griffmulde als auch das neben der Fahrzeugtür am Boden befindliche Vorfeld aus. Somit kann der Benutzer nicht nur die Griffmulde gut erkennen, sondern auch den Boden nahe der Fahrzeugtür, so dass ein Umknicken oder Stolpern oder auch das Treten in eine Pfütze vermieden werden können. Die Handhabe und das Gehäuse bilden dabei vom Erscheinungsbild her eine Einheit, so dass ein positiver optischer Eindruck entsteht. Das Gehäuse und die Handhabe können bereits vor der Montage der Handhabe am Fahrzeug in eine Baueinheit zusammengeführt werden. Hierdurch vereinfacht sich die Montage der Handhabe am Fahrzeug. Auch ist es möglich, die Beleuchtungseinrichtung an einer Vielzahl von verschiedenen Handhaben vorzusehen, welche auch weitere Elektronikkomponenten, wie beispielsweise Sensoren, enthalten können, aber nicht müssen.

Das Einschalten der Beleuchtungseinrichtung kann beispielsweise durch einen Sensor innerhalb der Handhabe geschehen, der die Annäherung des berechtigten Benutzers detektiert. Es ist auch möglich, die Beleuchtungseinrichtung durch eine Betätigung des Schlüssel zum Öffnen des Schlosses einzuschalten. Bei diesem Schlüssel kann es sich insbesondere auch um ein elektronisches Bauteil handeln, welches mit Tasten oder Ähnlichem ausgestattet ist und mit dem Fahrzeug mittels beispielsweise elektromagnetischer Wellen kommuniziert. Günstig ist es auch, die Beleuchtungseinrichtung durch Ausschalten des Motors am Kraftfahrzeug einzuschalten. Üblicherweise verlässt die Bedienperson nach dem Ausschalten des Motors das Fahrzeug. Dann ist es sinnvoll, das am Boden befindliche Vorfeld sehen zu können, um zu vermeiden, hier auf eine Unebenheit oder in eine Pfütze zu treten. Auch ist es günstig, den Bereich der Griffmulde auszuleuchten, um beispielsweise an der Handhabe befindliche Taster, Schalter oder Ähnliches betätigen zu können. Selbstverständlich sind noch weitere Möglichkeiten denkbar, um die Beleuchtungseinrichtung einzuschalten.

Weitere Vorteile und Ausgestaltungen der Erfindung ergeben sich aus der nachfolgenden Beschreibung, den Unteransprüchen und den Zeichnungen. Es zeigen:
- Fig. 1: ein Fahrzeug in Seitenansicht mit der erfindungsgemäßen Vorrichtung und beleuchteten Bereichen im Vorfeld,
- Fig. 2: das Fahrzeug aus Fig. 1 in Draufsicht,
- Fig. 3: eine erfindungsgemäße Handhabe in perspektivischer Darstellung,
- Fig. 4: einen Teil der Handhabe aus Fig. 3 in anderer Perspektive von unten,
- Fig. 5: den Ausschnitt V aus Fig. 4 in vergrößerter Darstellung von unten,
- Fig. 6: eine Draufsicht auf das Ende der Handhabe von Fig. 3 aus Sicht des Pfeiles VI,
- Fig. 7: eine erfindungsgemäße Beleuchtungseinrichtung,
- Fig. 8: eine Detaildarstellung einer erfindungsgemäßen Handhabe im Schnitt.

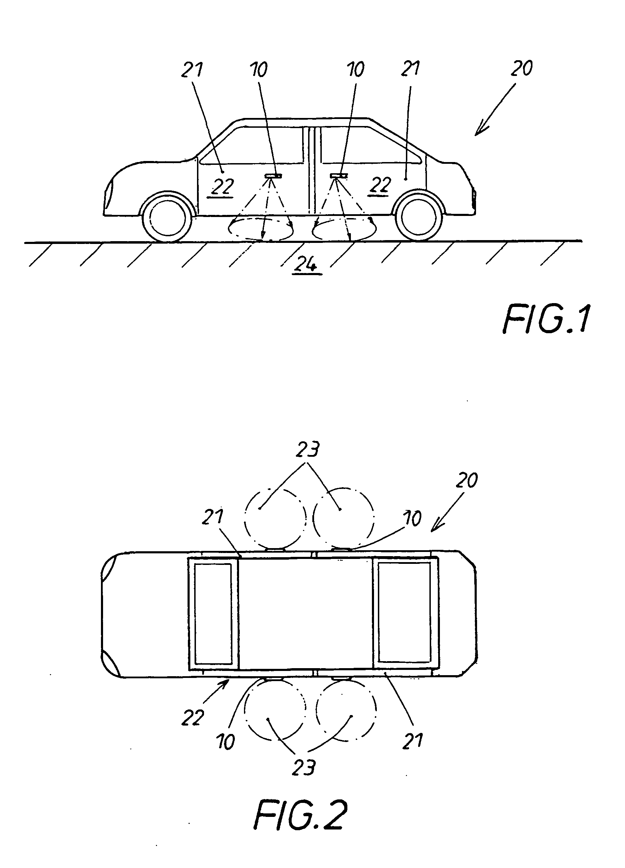

Die Fig. 1 und 2 zeigen ein Fahrzeug 20 mit der erfindungsgemäßen Außenbetätigung. An den Türen 21 des Fahrzeuges 20 sind Handhaben 10 zu erkennen. Die Handhaben 10 befinden sich an den Außenseiten 22 der Türen 21. Zwischen der Handhabe 10 und der Außenseite 22 ist die hier nicht näher gezeigte Griffmulde angeordnet. Bei eingeschalteten Beleuchtungseinrichtungen 30 wird neben den Griffmulden auch das jeweilige Vorfeld 23 beleuchtet, welches sich auf dem Boden 24 neben der betreffenden Tür 21 befindet. In Fig. 2 ist hierbei eine Situation gezeigt, wo das Kraftfahrzeug 20 vier Türen 21 aufweist, welche jeweils über eine Handhabe 10 verfügen, die mit einer Beleuchtungseinrichtung 30 ausgestattet ist. Somit werden alle Vorfelder 23 von den Beleuchtungseinrichtungen 30 beleuchtet. Es ist natürlich auch möglich, ein Fahrzeug 20 mit weniger Türen 21 vorzusehen oder die Beleuchtungseinrichtung 30, beispielsweise nur an der Fahrertür, anzuordnen.

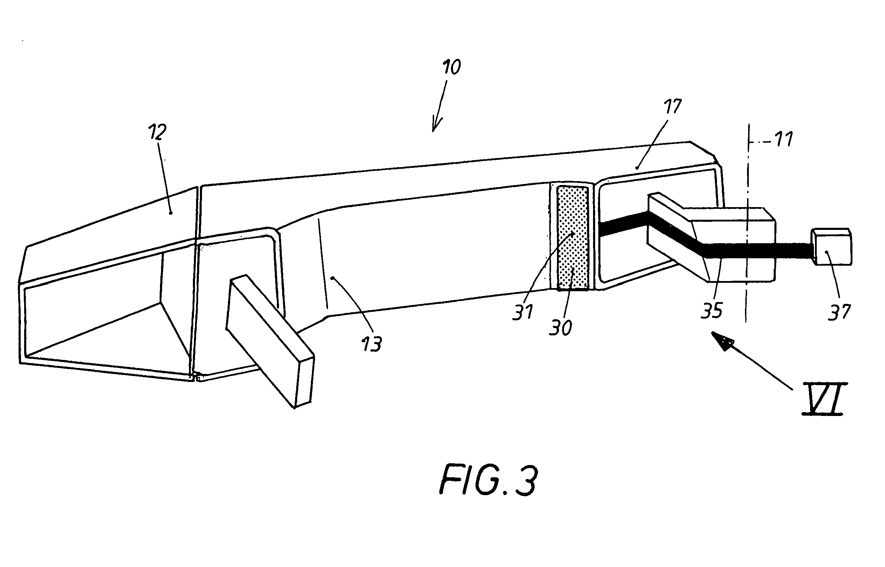

Fig. 3 zeigt die erfindungsgemäße Handhabe 10, welche an ihrem der Lagerachse 11 nahegelegenen Ende 17 die Beleuchtungseinrichtung 30 aufweist. Die Handhabe 10 ist hierbei zweiteilig ausgebildet und besitzt einen Blendenteil 12 und einen Griffkörper 13. Das Gehäuse 31 der Beleuchtungseinrichtung 30 ist als Teil des Griffkörpers 13 ausgebildet. In der bügelförmigen Handhabe 10 können auch noch weitere elektrische oder elektronische Bauelemente vorgesehen sein, beispielsweise Sensoren, Schalter, Antennen, Sender-Empfänger-Einheiten und Ähnliches. Die elektrischen Anschlusskabel 35 der Beleuchtungseinrichtung 30 sind über das der Lagerachse 11 zugeordnete Ende 17 der Handhabe 10 weitergeführt und werden von dort mit der Stromversorgung und/oder der Steuerung des Fahrzeuges 20 verbunden. Diese Anordnung ist deswegen vorteilhaft, weil nahe der Lagerachse 11 wenig mechanische Belastungen auf die elektrischen Anschlusskabel 35 einwirken. Es kommt somit kaum zu Beschädigungen, die beispielsweise Kurzschlüsse hervorrufen könnten.

Besonders vorteilhaft ist es, die elektrischen Anschlusskabel 35 in einen Stecker 37 zu führen, welcher einfach mit einer hier nicht näher gezeigten passenden Buchse im Fahrzeug 20 mit der Stromversorgung bzw. der Steuerung des Fahrzeuges 20 verbunden werden kann. Falls die Handhabe 10 noch weitere elektronische Bauteile beinhaltet, können auch die hierzu erforderlichen elektrischen Leitungen 18 mit an den Stecker 37 angeschlossen werden. Dies vereinfacht die Montage der Handhabe 10, da, wie bereits oben erwähnt, eine Kontaktierung mit der Stromversorgung bzw. der Steuerung des Fahrzeuges 20 hierdurch erleichtert wird.

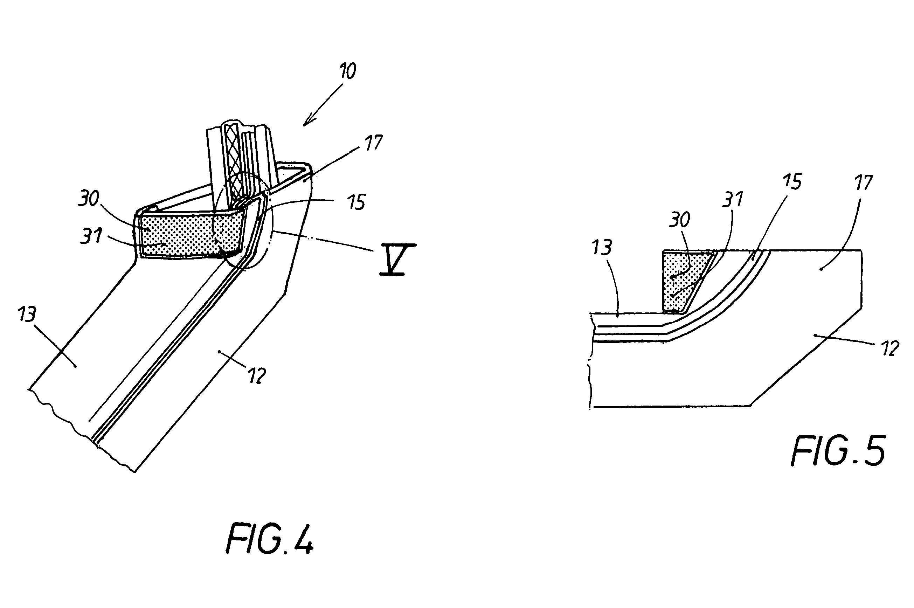

Die Fig. 4 zeigt nochmals etwas detaillierter das lagerachsenseitige 11 Ende 14 der Handhabe 10. Dieses Teil ist hier aus einer anderen Perspektive als in Fig. 3 dargestellt, nämlich schräg von unten. Man erkennt, dass das Gehäuse 31 der Beleuchtungseinrichtung 30 sich hier in Radialrichtung 14 weiter in Richtung des Bodens 24 erstreckt, als in die andere Richtung. Dies hat den Vorteil, dass das Vorfeld 23 gut beleuchtet wird, ohne jedoch die Bedienperson zu blenden, indem man das Licht von der Handhabe 10 aus nach oben leuchten lässt.

Fig. 5 zeigt einen Ausschnitt aus Fig. 4 in vergrößerter Darstellung. Man erkennt hier, dass das Gehäuse 31 der Beleuchtungseinrichtung 30 einen Teil des Griffkörpers 13 bildet. Das Gehäuse 31 ragt aber in Radialrichtung 14 nicht bis an den Blendenteil 12 heran. Vielmehr wird das Gehäuse 31 vom stegartigen Element 15 des Griffkörpers 13 umfasst. Dies hat den Vorteil, dass an der Nut zwischen Griffkörper 13 und Blendenteil 12 keine Stelle entsteht, an der drei Bauteile aufeinandertreffen. Solche Stellen sind ungünstig, da es durch die Fertigungstoleranzen nur sehr schwer zu einem einheitlichen Bild kommt und solche Stellen auch immer Schwachstellen in der Festigkeit darstellen.

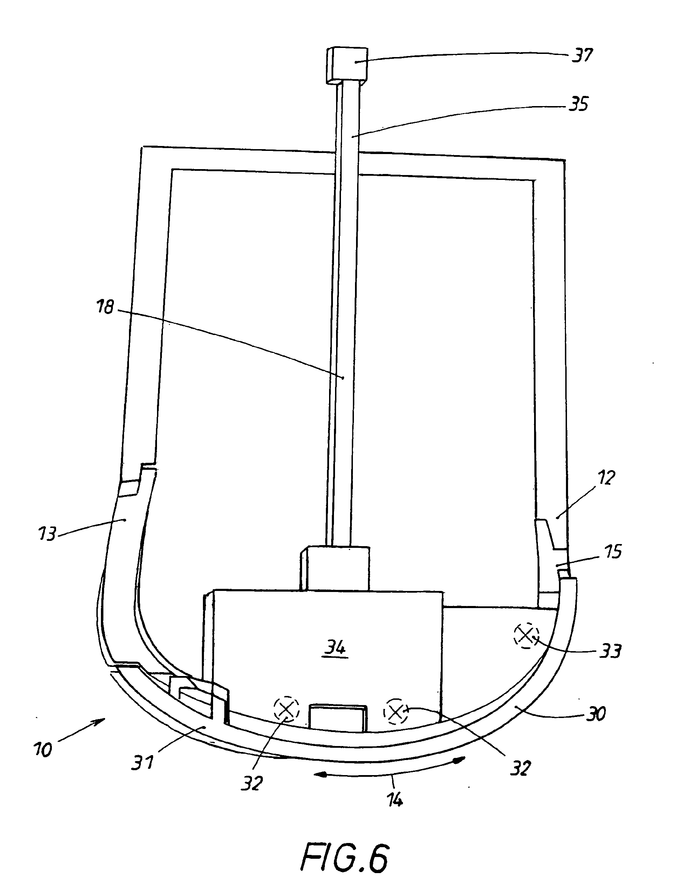

Fig. 6 zeigt nun die Beleuchtungseinrichtung 30 im eingebauten Zustand im Detail. Der obere Teil des Gehäuses 31 der Beleuchtungseinrichtung 30 ist nicht dargestellt, um den inneren Aufbau der Beleuchtungseinrichtung 30 näher erläutern zu können. Die Beleuchtungseinrichtung 30 beinhaltet eine Platine 34, über die die Stromzufuhr und Ansteuerung der Lichtquellen 32, 33 erfolgt. Als Lichtquellen 32, 33 werden hier vorzugsweise LED's eingesetzt, da diese einen geringen Stromverbrauch haben und auch nicht heiß werden, so dass auch nach längerer Beleuchtungszeit die Bedienperson die Handhabe 10 gefahrlos anfassen kann.

Auf der Platine 34 sind erste Lichtquellen 32 angeordnet, welche sich in Fig. 6 unterhalb der Platine befinden und daher gestrichelt dargestellt sind. Diese ersten Lichtquellen 32 beleuchten die Griffmulde des Fahrzeugs 20. Darüber hinaus ist noch eine zweite Lichtquelle 33 vorgesehen, welche ebenfalls unterhalb der Platine 34 angeordnet ist und die dazu dient, das Vorfeld 23 auszuleuchten. Diese zweite Lichtquelle 33 ist auch in dem in Richtung des Bodens 24 befindlichen Bereich des Gehäuses 31 angeordnet und liegt somit in Radialrichtung 14 auch näher im Bereich des Bodens 24 als die ersten Lichtquellen 32. Um eine möglichst gute Ausleuchtung des Vorfelds 23 zu bewirken, sollte die zweite Lichtquelle 33 in Richtung des Bodens 24 ausgerichtet sein; die ersten Lichtquellen 32 sind in Richtung der Griffmulde gerichtet.

Auch hier ist zu erkennen, dass die Handhabe 10 aus einem Blendenteil 12 und einem Griffkörper 13 besteht. Das Gehäuse 31 fügt sich gut in die Form des Griffkörpers 13 ein. An der Seite der Handhabe 10, die zum Boden 24 gerichtet ist, erkennt man zwischen dem Gehäuse 31 und dem Blendenteil 12 das stegartige Element 15 des Griffkörpers 13. Die elektrischen Anschlusskabel 35, die an die Platine 34 angeschlossen sind, enden in einem Stecker 37, welcher im Fahrzeug einfach angeschlossen werden kann. Darüber hinaus sind an diesem Stecker 37 auch elektrische Leitungen 18 angeschlossen, welche von elektrischen bzw. elektronischen Bauteilen aus dem Inneren der Handhabe 10 stammen.

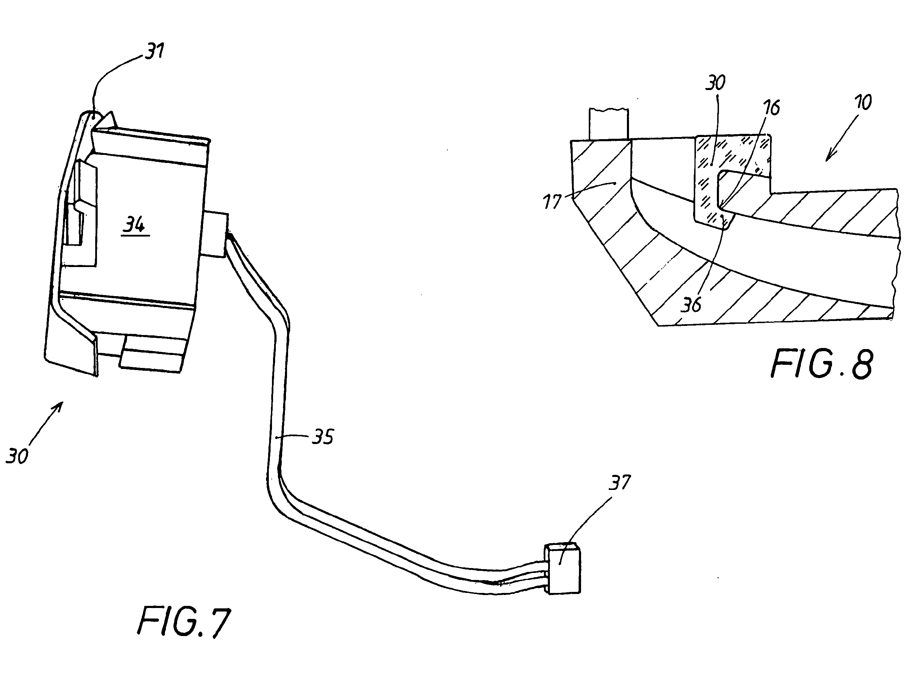

Fig. 7 zeigt nunmehr die Beleuchtungseinrichtung 30. Diese bildet eine kompakte Baugruppe, welche in der Handhabe 10 einfach und schnell montiert werden kann. An die elektrischen Anschlusskabel 35 ist auch hier der Stecker 37 angeschlossen. In diesem Falle sind keine weiteren elektrischen Leitungen 18 vorgesehen. Wie der Stecker 37 ausgestaltet ist, hängt vom jeweiligen Anwendungsfall ab.

Fig. 8 schließlich zeigt die Anwendung der Beleuchtungseinrichtung 30 in einer einteilig ausgebildeten Handhabe 10. Diese ist hier jedoch nur beispielhaft dargestellt. Genauso gut ist es denkbar, diese Ausgestaltung an einer mehrteiligen Handhabe 10 vorzusehen.

Die Handhabe 10 besitzt ein Rastmittel 16. Die Beleuchtungseinrichtung 30 ist mit einem Gegenrastmittel 36 versehen. Beim Einbau der Beleuchtungseinrichtung 30 wird das Gegenrastmittel 36 am Rastmittel 16 verrastet, so dass eine sichere und feste Verbindung besteht und die Beleuchtungseinrichtung 30 und die Handhabe 10 eine geschlossene Baugruppe bilden, die so am Fahrzeug 20 montiert werden kann. Vorzugsweise können die Handhabe 10 sowie auch das Gehäuse 31 der Beleuchtungseinrichtung 30 aus Kunststoff bestehen. In diesem Falle ist es besonders günstig, die Rastmittel 16 bzw. Gegenrastmittel 36 bereits beim Herstellungsprozess, beispielsweise durch Spritzgießen, anzuformen.

Die hier dargestellten Ausführungsformen sind nur beispielhafte Verwirklichungen der Erfindung. Diese ist nicht darauf beschränkt. Es sind vielmehr noch vielerlei Abweichungen und Abwandlungen möglich.

### Bezugszeichenliste:

- 10: Handhabe
- 11: Lagerachse
- 12: Blendenteil
- 13: Griffkörper
- 14: Radialrichtung von 13
- 15: Stegartiges Element von 13
- 16: Rastmittel
- 17: Ende von 10 nahe 11
- 18: Elektrische Leitung
- 20: Kraftfahrzeug
- 21: Tür
- 22: Außenseite von 21
- 23: Vorfeld
- 24: Boden
- 30: Beleuchtungseinrichtung
- 31: Gehäuse
- 32: Erste Lichtquellen
- 33: Zweite Lichtquellen
- 34: Platine
- 35: Elektrische Anschlusskabel
- 36: Gegenrastmittel
- 37: Stecker

## Patentansprüche

1. Außenbetätigung für Schlösser an Türen (21), Klappen und dergleichen, an einem Kraftfahrzeug (20),
mit einer Handhabe (10), die an der Außenseite (22) der Tür (21) angeordnet ist und zum Öffnen der Tür (21) dienen kann,
wobei die Handhabe (10) eine Lagerachse (11) besitzt, an welcher diese schwenkbar gelagert ist,
mit einer Griffmulde, welche an der Außenseite (22) der Tür (21) im Bereich der Handhabe (10) ausgebildet ist,
und mit einer Beleuchtungseinrichtung (30), durch welche die Griffmulde beleuchtbar ist,
**dadurch gekennzeichnet,**
**dass** die Beleuchtungseinrichtung (30) ein Gehäuse (31) umfasst, welches als Teil der Handhabe (10) ausgebildet und nahe der Lagerachse (11) angeordnet ist
und **dass** die Beleuchtungseinrichtung (30) neben der Griffmulde auch gleichzeitig das neben der Fahrzeugtür (21) am Boden (24) befindliche Vorfeld (23) beleuchtet.

2. Außenbetätigung nach Anspruch 1, **dadurch gekennzeichnet, dass** als Lichtquellen (32, 33) in der Beleuchtungseinrichtung (30) eine oder mehrere LEDs dienen.

3. Außenbetätigung nach einem der Ansprüche 1 oder 2, **dadurch gekennzeichnet, dass** die Beleuchtungseinrichtung (30) eine Platine (34) umfasst, die die Stromzufuhr und die Steuerung der Lichtquellen (32, 33) übernimmt.

4. Außenbetätigung nach einem der Ansprüche 1 bis 3, **dadurch gekennzeichnet, dass** die Beleuchtungseinrichtung (30) mehrere Lichtquellen (32, 33) umfasst, wovon eine oder mehrere erste Lichtquellen (32) den Bereich der Griffmulde und eine oder mehrere zweite Lichtquellen (33) das Vorfeld (23) beleuchten.

5. Außenbetätigung nach einem der Ansprüche 1 bis 4, **dadurch gekennzeichnet, dass** die Handhabe (10) einteilig ausgebildet ist.

6. Außenbetätigung nach einem der Ansprüche 1 bis 4, **dadurch gekennzeichnet, dass** die Handhabe (10) mehrteilig ausgebildet ist, wobei diese zumindest einen Griffkörper (13) und einen Blendenteil (12) umfasst,
und dass insbesondere das Gehäuse (31) der Beleuchtungseinrichtung (30) einen Teil des Griffkörpers (13) bildet.

7. Außenbetätigung nach Anspruch 6, **dadurch gekennzeichnet, dass** die Beleuchtungseinrichtung (30) in Radialrichtung (14) des Griffkörpers (13) sich weiter in Richtung des Bodens (24) erstreckt als in die andere Richtung.

8. Außenbetätigung nach einem der Ansprüche 6 oder 7, **dadurch gekennzeichnet, dass** sich das Gehäuse (31) der Beleuchtungseinrichtung (30) nicht bis an den Blendenteil (12) erstreckt, sondern dann zumindest noch ein stegartig ausgebildetes Element (15) des Griffköpers (13) das Gehäuse (31) in Radialrichtung (14) umfasst.

9. Außenbetätigung nach einem der Ansprüche 1 bis 8, **dadurch gekennzeichnet, dass** die Beleuchtungseinrichtung (30) über elektrische Anschlusskabel (35) verfügt, welche über das der Lagerachse (11) zugeordnete Ende (17) der Handhabe (10) einer Stromversorgung und / oder einer Steuerung zugeführt werden.

10. Außenbetätigung nach Anspruch 9, **dadurch gekennzeichnet, dass** die elektrischen Anschlusskabel (35) an einen Stecker (37) anschließbar sind, welcher an die Stromversorgung des Fahrzeugs (20) anschließbar ist.

11. Außenbetätigung nach Anspruch 10, **dadurch gekennzeichnet, dass** an den Stecker (37) auch elektrische Leitungen (18) anderer, in der Handhabe (10) befindlicher Elektronikteile anschließbar sind.

12. Außenbetätigung nach einem der Ansprüche 1 bis 11, **dadurch gekennzeichnet, dass** die Handhabe (10) ein Rastmittel (16) aufweist, wobei die Beleuchtungseinrichtung (30) über ein Gegenrastmittel (36) verfügt,
und dass das Gegenrastmittel (36) der Beleuchtungseinrichtung (30) mit dem Rastmittel (16) der Handhabe (10) verrastbar ist, wodurch ein Einbauzustand entsteht.

13. Außenbetätigung nach einem der Ansprüche 1 bis 12, **dadurch gekennzeichnet, dass** die Handhabe (10) und / oder das Gehäuse (31) der Beleuchtungseinrichtung (30) aus Kunststoff bestehen.

14. Außenbetätigung nach den Ansprüchen 12 und 13, **dadurch gekennzeichnet, dass** die Handhabe (10) und / oder das Gehäuse (31) durch Spritzgießen hergestellt werden und dass das Rastmittel (16) und / oder das Gegenrastmittel (36) bereits beim Herstellungsprozess angeformt werden.

15. Außenbetätigung nach einem der Ansprüche 1 bis 14, **dadurch gekennzeichnet, dass** die Beleuchtungseinrichtung (30) durch Annäherung eines berechtigten Benutzers und / oder Betätigung des Schlüssels zum Öffnen des Schlosses und / oder durch Ausschalten des Motors des Kraftfahrzeugs (20) eingeschaltet wird.

## Claims

1. Outside actuation system for locks on doors (21), tailgates and the like on a vehicle (20),
with arranged on the outside (22) of the door (21) a handgrip (10) which can serve to open the door (21),
whereby the handgrip (10) has a bearing axis (11) on which said handgrip is swivel-mounted,
with a recessed grip which is formed on the outside (22) of the door (21) in the area of the handgrip (10),
and with an lighting device (30) by means of which the recessed grip can be illuminated,
thereby **characterized,**
**in that** the lighting device (30) comprises a housing (31) which is designed as part of the handgrip (10) and is arranged near the bearing axis (11),
and **in that** apart from the recessed grip the lighting device (30) simultaneously illuminates the adjacent area (23) on the ground (24) near the door (21) of the vehicle.

2. Outside actuation system pursuant to Claim 1, thereby **characterized in that** serving as light sources (32, 33) in the lighting device (30) are one or more LEDs.

3. Outside actuation system pursuant to one of the claims 1 or 2, thereby **characterized in that** the lighting device (30) comprises a circuit board (34) which takes care of the electricity supply and control of the light sources (32, 33).

4. Outside actuation system pursuant to one of the claims 1 to 3, thereby **characterized in that** the lighting device (30) comprises several light sources (32, 33) of which one or more first light sources (32) illuminate the area of the recessed grip and one or more second light sources (33) illuminate the adjacent area (23).

5. Outside actuation system pursuant to one of the claims 1 to 4, thereby **characterized in that** the handgrip (10) is designed as one piece.

6. Outside actuation system pursuant to one of the claims 1 to 4, thereby **characterized in that** the handgrip (10) is multi-pieced in design, whereby it comprises at least a handle element (13) and a cover element (12),
and **in that** particularly the housing (31) of the lighting device (30) forms part of the handle element (13).

7. Outside actuation system pursuant to Claim 6, thereby **characterized in that** in the radial direction (14) of the handle element (13) the lighting device (30) extends more in the direction of the ground (24) than in the other direction.

8. Outside actuation system pursuant to one of the claims 6 or 7, thereby **characterized in that** the housing (31) of the lighting device (30) does not extend all the way to the cover element (12), rather, at least yet another bar-like element (15) of the handle element (13) then encloses the housing (31) in radial direction (14).

9. Outside actuation system pursuant to one of the claims 1 to 8, thereby **characterized in that** the lighting device (30) has electrical connection wires (35) which via the end (17) of the handgrip (10) assigned to the bearing axis (11) are directed to an electricity supply and / or to a control element.

10. Outside actuation system pursuant to Claim 9, thereby **characterized in that** the electrical connection wires (35) can be connected to a plug (37) which can be connected to the electricity supply of the vehicle (20).

11. Outside actuation system pursuant to Claim 10, thereby **characterized in that** the plug (37) can also accommodate the electrical lines (18) of other electronic elements found in the handgrip (10).

12. Outside actuation system pursuant to one of the claims 1 to 11, thereby **characterized in that** the handgrip (10) exhibits a snap-in agent (16), whereby the lighting device (30) has a counter snap-in agent (36),
and **in that** the counter snap-in agent (36) of the lighting device (30) can be snapped together with the snap-in agent (16) of the handgrip (10), whereby readiness for insertion is achieved.

13. Outside actuation system pursuant to one of the claims 1 to 12, thereby **characterized in that** the handgrip (10) and / or the housing (31) of the lighting device (30) are made of plastic.

14. Outside actuation system pursuant to claims 12 and 13, thereby **characterized in that** the handgrip (10) and / or the housing (31) are produced by means of injection molding and that the snap-in agent (16) and / or the counter snap-in agent (36) are already formed in the production process.

15. Outside actuation system pursuant to one of the claims 1 to 14, thereby **characterized in that** the lighting device (30) will be switched on by the approach of an authorized user and / or by actuation of the key to open the lock and / or by switching off the motor of the vehicle (20).

## Revendications

1. Dispositif d'actionnement extérieur destiné à des serrures de portières (21), de hayons et similaires sur un véhicule automobile (20),
avec un moyen de maniement (10) agencé contre le côté extérieur (22) de la portière (21) et pouvant servir à ouvrir la portière (21),
sachant que le moyen de maniement (10) possède un axe palier (11) sur lequel ledit moyen prend un appui lui permettant de pivoter,
avec une auge de poignée configurée contre le côté extérieur (22) de la portière (21) dans la zone du moyen de maniement (10),
et avec un dispositif d'éclairage (30) permettant d'éclairer l'auge de poignée,
**caractérisé en ce que**
le dispositif d'éclairage (30) comprend un boîtier (31) configuré en tant que partie du moyen de maniement (10) et agencé à proximité de l'axe palier (11)
et **en ce que** le dispositif d'éclairage (30) illumine simultanément, outre l'auge de poignée, également l'espace (23) au sol (24) proche de la portière (21) du véhicule.

2. Dispositif d'actionnement extérieur selon la revendication 1, **caractérisé en ce qu'**une ou plusieurs LED situées dans le dispositif d'éclairage (30) servent de sources de lumière (32, 33).

3. Dispositif d'actionnement extérieur selon l'une des revendications 1 ou 2, **caractérisé en ce que** le dispositif d'éclairage (30) comprend une carte (34) qui se charge d'alimenter électriquement et de piloter les sources de lumière (32, 33).

4. Dispositif d'actionnement extérieur selon l'une des revendications 1 à 3, **caractérisé en ce que** le dispositif d'éclairage (30) comprend plusieurs sources de lumière (32, 33), une ou plusieurs première(s) source(s) d'éclairage (32) illuminant la zone de l'auge de poignée et une ou plusieurs seconde(s) source(s) d'éclairage (33) illuminant l'espace proche (23).

5. Dispositif d'actionnement extérieur selon l'une des revendications 1 à 4, **caractérisé en ce que** le moyen de maniement (10) est configuré monobloc.

6. Dispositif d'actionnement extérieur selon l'une des revendications 1 à 4, **caractérisé en ce que** le moyen de maniement (10) est configuré en plusieurs parties, ledit moyen comprenant au moins un corps de poignée (13) et une pièce enjoliveuse (12),
et **en ce que** notamment le boîtier (31) du dispositif d'éclairage (30) forme une partie du corps de poignée (13).

7. Dispositif d'actionnement extérieur selon la revendication 6, **caractérisé en ce que** le dispositif d'éclairage (30) s'étend, en direction radiale (14) du corps (13) de poignée, plus en direction du sol (24) que dans l'autre direction.

8. Dispositif d'actionnement extérieur selon l'une des revendications 6 ou 7, **caractérisé en ce que** le boîtier (31) du dispositif d'éclairage (30) ne s'étend pas jusque contre la pièce enjoliveuse (12), mais **en ce qu'**ensuite au moins encore un élément (15), configuré en nervure, du corps (13) de poignée comprend le boîtier (31) dans le sens radial (14).

9. Dispositif d'actionnement extérieur selon l'une des revendications 1 à 8, **caractérisé en ce que** le dispositif d'éclairage (30) dispose de fils de raccordement (35) électriques arrivant à une alimentation électrique et / ou une commande via l'extrémité (17) du moyen de maniement (10) affectée à l'axe palier (11).

10. Dispositif d'actionnement extérieur selon la revendication 9, **caractérisé en ce que** les fils de raccordement (35) électriques sont raccordables à un connecteur (37) lequel est lui-même raccordable à l'alimentation électrique du véhicule (20).

11. Dispositif d'actionnement extérieur selon la revendication 10, **caractérisé en ce que** peuvent être raccordés au connecteur (37) également des lignes électriques (18) afférentes à d'autres pièces électroniques situées dans le moyen de maniement (10).

12. Dispositif d'actionnement extérieur selon les revendications 1 à 11, **caractérisé en ce que** le moyen de maniement (10) présente un moyen de crantage (16), le dispositif d'éclairage (30) disposant d'un moyen de crantage antagoniste (36),
et **en ce que** le moyen de crantage antagoniste (36) de l'équipement d'éclairage (30) peut encranter avec le moyen de crantage (16) que comporte le moyen de maniement (10), ce qui engendre un état d'incorporation.

13. Dispositif d'actionnement extérieur selon l'une des revendications 1 à 12, **caractérisé en ce que** le moyen de maniement (10) et/ou le boîtier (31) du dispositif d'éclairage (30) sont en matière plastique.

14. Dispositif d'actionnement extérieur selon les revendications 12 et 13, **caractérisé en ce que** le moyen de maniement (10) et / ou le boîtier (31) sont fabriqués par moulage injecté et **en ce que** le moyen de crantage (16) et / ou le moyen de crantage antagoniste (36) acquièrent déjà leur forme moulée pendant le processus de fabrication.

15. Dispositif d'actionnement extérieur selon l'une des revendications 1 à 14, **caractérisé en ce que** le dispositif d'éclairage (30) s'allume lorsque s'approche un utilisateur détenant un droit et / ou lors d'un actionnement de la clé pour ouvrir la serrure et / ou lors de l'extinction du moteur du véhicule automobile (20).
